# EUROPÄISCHE PATENTANMELDUNG

(11) **EP 2 604 336 A2**
(43) Veröffentlichungstag der Anmeldung: **19.06.2013**
(21) Anmeldenummer: 12196865.5
(22) Anmeldetag: 13.12.2012
(51) Int. Cl.: B01J 13/04, C09B 67/02, B01J 13/22

(54) **Verfahren und Vorrichtung zur Herstellung von befüllten Additivkapseln**

(30) Priorität: 14.12.2011 DE 102011056433
(71) Anmelder: Schrader, Helmut G., 64291 Darmstadt (DE)
(72) Erfinder: Schrader, Helmut G., 64291 Darmstadt (DE)
(74) Vertreter: Katscher Habermann Patentanwälte

(57) **Zusammenfassung**

Bei einem Verfahren zur Herstellung von Additivkapseln (12), die in einer Kapselhülle (19) eine Portion einer Additivsubstanz (18) enthalten, wird die Additivsubstanz in einen Schlauchstrang (10) aus einem Umhüllungsmaterial eingefüllt, der anschließend in mehrere abgeschlossene Kapselhüllen (19) unterteilt wird, die jeweils eine Portion der Additivsubstanz (18) enthalten. Der Schlauchstrang (10) wird mit einem Extrusionsverfahren aus einem geeigneten Polymermaterial hergestellt und die Additivsubstanz wird während oder unmittelbar im Anschluss an die Extrusion des Schlauchstrangs (10) in den Schlauchstrang (10) eingefüllt. Ein mit der Additivsubstanz befüllter Abschnitt (14) des Schlauchstrangs (10) wird gleichzeitig in mehrere jeweils abgeschlossene Kapselhüllen (19) unterteilt. Eine Vorrichtung (1) zur Herstellung von Additivkapseln (12) weist eine Befüllungseinrichtung (7), mit der eine Additivsubstanz in einen Schlauchstrang (10) eingefüllt werden kann, und eine Konfektionierungseinrichtung (11) auf, in der der befüllte Schlauchstrang (10) in einzelne geschlossene Kapselhüllen (19) unterteilt werden kann, die jeweils eine Portion der Additivsubstanz (18) enthalten. Die Vorrichtung (1) weist eine Extrusionsvorrichtung auf, wobei die Befüllungseinrichtung (7) mit der Extrusionsvorrichtung kombiniert oder unmittelbar anschließend angeordnet ist. Die Befüllungseinrichtung (7) weist eine Stopfpumpe (9), hydraulische Pumpe, einen Verdichter, einen Extruder oder einen pneumatischen Dichtstromförderer auf.

## Beschreibung

Die Erfindung betrifft ein Verfahren zur Herstellung von befüllten Additivkapseln, die in einer Kapselhülle eine Portion einer Additivsubstanz enthalten.

Befüllte Additivkapseln werden in zahlreichen Variationen in vielfältigen Anwendungsbereichen insbesondere in der Chemie, in der Pharmazie und in der Umwelttechnik verwendet. In Mikro- oder Makrokapseln enthaltene pharmazeutische Wirkstoffe können über einen vorgebbaren Zeitraum freigesetzt werden. Additivsubstanzen können durch die Umhüllung vor einer Reaktion beispielsweise mit Luft, Licht oder Flüssigkeiten geschützt werden. Es besteht ein großer Bedarf an Additivkapseln und an Verfahren, die für den jeweiligen Anwendungsfall geeigneten Additivkapseln wirtschaftlich und kostengünstig herzustellen.

Die befüllten Additivkapseln können zweckmäßigerweise einen Durchmesser zwischen 0,1 mm und weniger bis zu 10 mm und mehr aufweisen. Für viele Anwendungsbereiche dürfte ein Durchmesser von etwa 2 mm bis 3 mm geeignet sein. Derartige Additivkapseln beinhalten eine feste oder flüssige, bzw. pastöse, eventuell auch gasförmige Additivsubstanz, deren Volumen beispielsweise näherungsweise dem Volumen eines Wassertropfens oder weniger entspricht.

Aus der Praxis sind viele verschiedene Herstellungsverfahren für befüllte Mikrokapseln oder Makrokapseln bekannt, die beispielsweise auf physikalischen Verfahren wie Vertropfung, Sprühtrocknung oder Wirbelschicht-Coating, auf chemischen Verfahren wie zum Beispiel Grenzflächenpolymerisation oder molekularen Einschlüssen oder auf physiochemischen Verfahren wie Koazervation oder Liposomalen Einschlüssen beruhen. Als Kapselwandmaterial stehen sowohl natürliche als auch insbesondere synthetische Polymere zur Verfügung. In Abhängigkeit von der jeweiligen Additivsubstanz und den Anforderungen, die sich durch die angestrebte Verwendung der Additivkapseln ergeben, können und müssen geeignete Kapselwandmaterialien ausgewählt und für die Herstellung der Additivkapseln verwendet werden.

Mit den verschiedenen Herstellungsverfahren können dabei nicht beliebige Additivsubstanzen oder beliebige Kapselwandmaterialien verarbeitet oder miteinander kombiniert werden, so dass je nach Verwendungszweck der Additivkapseln unterschiedliche Beschränkungen hinsichtlich der Kapselwandmaterialien und der zur Verfügung stehenden Herstellungsverfahren existieren und beachtet werden müssen.

Bei der Kunststoffverarbeitung und insbesondere bei der Herstellung von Kunststoffprodukten können beispielsweise flüssige Schleppmitteladditive beigesetzt werden, die ein Ausgasen von flüchtigen Schadstoffen oder Geruchsstoffen während der Herstellung des Kunststoffprodukts begünstigen. Darüber hinaus werden dem zu verarbeitenden Polymer oftmals Additivsubstanzen wie beispielsweise Farb- oder Funktionspigmente zugesetzt. Wenn die Zusatzstoffe in Form von Additivkapseln zugefügt werden, was für das Herstellungsverfahren der Kunststoffprodukte oftmals äußerst vorteilhaft ist, muss die Umhüllung der Additivkapseln kompatibel zu dem jeweiligen Rohpolymer sein. Die Herstellung von Additivkapseln mit einer flüssigen oder festen Additivsubstanz, die zur Verwendung in der Kunststoffverarbeitung geeignet sind, ist aufwändig und kostenintensiv.

Es wird deshalb als eine Aufgabe der vorliegenden Erfindung angesehen, ein Verfahren zur Herstellung von Additivkapseln so auszugestalten, dass die mit einer Additivsubstanz befüllten Additivkapseln für die Verwendung in der Kunststoffverarbeitung geeignet sind und einfach und kostengünstig hergestellt werden können.

Diese Aufgabe wird erfindungsgemäß dadurch gelöst, dass die Additivsubstanz in einen Schlauchstrang aus Umhüllungsmaterial eingefüllt wird, der anschließend in mehrere abgeschlossene Kapselhüllen unterteilt wird, die jeweils eine Portion der Additivsubstanz enthalten.

Der Schlauchstrang kann zweckmäßigerweise aus einem geeigneten Polymermaterial, insbesondere aus einem Kunststoffmaterial bestehen. Das für die Kapselhülle verwendete Umhüllungsmaterial kann in vorteilhafterweise an den jeweiligen Verwendungszweck der Additivkapseln angepasst sein. Durch die Befüllung eines Schlauchstrangs mit der Additivsubstanz kann eine feste oder pulverförmige Additivsubstanz oder aber eine flüssige oder sogar gasförmige Additivsubstanz in den Schlauchstrang eingefüllt werden, bevor dieser anschließend in mehrere jeweils abgeschlossene Kapselhüllen unterteilt wird, die dann jeweils eine durch das Volumen der einzelnen abgeschlossenen Kapselhüllen vorgegebene Portion der Additivsubstanz enthalten.

Als Additivsubstanzen könnten Farbstoffe, Funktionsstoffe wie beispielsweise Dispersionsstoffe oder Porenbildner, Verstärkungskomponenten wie beispielsweise Glasfasern oder Kohlenstofffasern, Kunstfasern oder Naturfasern, sowie Füllstoffe und Verarbeitungshilfsstoffe in unterschiedlichen Konsistenzen und Mengenverhältnissen eingesetzt werden. Die Additivsubstanzen können dabei nahezu beliebig in fester oder flüssiger, bzw. pastöser Form und eventuell auch gasförmig in die Kapselhülle eingebracht werden.

Es ist in technischer Hinsicht ohne größeren Aufwand möglich, einen Schlauchstrang mit einer Wanddicke von deutlich weniger als 0,1 mm zu verwenden. Insbesondere bei einem folienartigen Schlauchstrang kann die Wanddicke 0,01 mm oder weniger betragen.

Die Größe bzw. der Durchmesser einer einzelnen Kapselhülle kann in Abhängigkeit von dem für den Schlauchstrang verwendeten Umhüllungsmaterial zweckmäßigerweise einige Millimeter betragen.

Um eine kostengünstige Herstellung einer großen Anzahl von Additivkapseln in kurzer Zeit zu ermöglichen ist vorgesehen, dass ein mit der Additivsubstanz befüllter Abschnitt des Schlauchstrangs gleichzeitig in mehrere abgeschlossene Kapselhüllen unterteilt wird. Die Länge des Abschnitts des Schlauchstrangs, der gleichzeitig in eine entsprechende Anzahl jeweils abgeschlossener Kapselhüllen bzw. Additivkapseln unterteilt wird, kann viele Zentimeter und bis zu einem Meter oder mehr betragen, so dass mehrere zehn oder mehrere hundert Additivkapseln gleichzeitig hergestellt werden können.

Wenn für die Kapselhülle ein Thermoplast verwendet wird, kann der Schlauchstrang durch geeignete Füge-, Verschluss- und Trennverfahren wie Erhitzen, Ultraschall-Schweißen, Wärme-Impulsschweißen oder Kleben in einzelne abgeschlossene Kapselhüllen aufgeteilt werden, die anschließend voneinander getrennt und in einzelne Additivkapseln unterteilt werden können.

Es ist ebenfalls denkbar, dass nacheinander einzelne Additivkapseln von dem Schlauchstrang abgeteilt, bzw. an einem Ende des Schlauchstrangs gebildet und anschließend abgetrennt werden.

Im Hinblick auf eine möglichst rasche und kostengünstige Herstellung von Additivkapseln ist vorgesehen, dass der Schlauchstrang mit einem Extrusionsverfahren aus einem geeigneten Polymermaterial hergestellt wird. Bei dem Polymermaterial kann es sich um künstliche oder natürliche Polymere handeln, wobei in vielen Anwendungsbereichen in vorteilhafter Weise extrusionsfähige Kunststoffmaterialien zum Einsatz kommen können.

Die Additivsubstanz kann während oder unmittelbar im Anschluss an die Extrusion des Schlauchstrangs in den Schlauchstrang eingefüllt werden. Es ist technisch ohne weiteres möglich, das Befüllen des durch Extrusion hergestellten Schlauchstrangs in die Extrudiervorrichtung zu integrieren, so dass ein mit der Additivsubstanz befüllter Schlauchstrang mit Hilfe eines in geeigneter Weise angepassten Extrusionswerkzeugs extrudiert wird. Der befüllte Schlauchstrang kann unmittelbar nach dem Extrudieren konfektioniert und dabei in mehrere abgeschlossene Kapselhüllen unterteilt werden.

Um beispielsweise Additivkapseln mit einer aggressiven Additivsubstanz herstellen zu können ist vorgesehen, dass der Schlauchstrang mehrschichtig hergestellt wird. Durch die mehreren Schichten, die der Schlauchstrang aufweist, kann eine gegenüber der aggressiven Additivsubstanz inerte oder unempfindliche innere Wandschicht mit einer äußeren Wandschicht aus einem anderen Material kombiniert werden, die eine ausreichende Elastizität und Dehnfestigkeit aufweist und für die mechanischen Eigenschaften der Additivkapseln maßgebend ist. Mit mehreren Schichten können auch in einfacher und kostengünstiger Weise ein gasdichter Schlauchstrang und daraus eine gasdichte Kapselhülle extrudiert, bzw. hergestellt werden.

Es ist ebenso denkbar, dass der Schlauchstrang vor, während oder nach der Befüllung mit der Additivsubstanz aufgedehnt wird. Mit einem geeigneten Aufdehnungs-Formwerkzeug können Schlauchstränge aus einem geeigneten Umhüllungsmaterial auf ein Mehrfaches und bei Verwendung eines besonders dehnfähigen Umhüllungsmaterials um bis zu fünfhundertfaches des ursprünglichen Durchmessers vergrößert werden, bevor die Additivsubstanz in den aufgedehnten Schlauchstrang eingefüllt wird. Die Befüllung des Schlauchstrangs mit der Additivsubstanz wird auf diese Weise erheblich erleichtert. Wenn ein elastisches Umhüllungsmaterial verwendet wird, bewirkt eine anschließende Querschnittsverringerung, dass sich in besonders einfacher Weise Additivkapseln mit einem geringen Durchmesser unterteilen bzw. herstellen lassen.

Es können auch befüllte Additivkapseln hergestellt werden, die mehrere Kammern mit jeweils unterschiedlichen Additivsubstanzen enthalten. Zu diesem Zweck kann der Schlauchstrang mehrere sich über die Länge des Schlauchstrangs oder eines Abschnitts des Schlauchstrangs erstreckende Kammern aufweisen, die mit einer ersten Additivsubstanz und mit mindestens einer zweiten Additivsubstanz befüllt werden, die sich durch deren Zusammensetzung und/oder deren Aggregatzustand von der ersten Additivsubstanz unterscheidet.

Es ist auf diese Weise auch möglich beispielsweise gleichzeitig eine erste Portion einer pulverförmigen Additivsubstanz zusammen mit einer zweiten Portion einer flüssigen Additivsubstanz in der Kapselhülle anzuordnen. Durch die gleichzeitige Anordnung verschiedener und voneinander separierter Additivsubstanzen in einer einzelnen Additivkapsel können völlig neue Verwendungsmöglichkeiten und Anwendungsbereiche für derartige Additivkapseln erschlossen werden.

Die Erfindung betrifft auch eine Vorrichtung zur Herstellung von Additivkapseln mit einer Befüllungseinrichtung, in der eine Additivsubstanz in einen Schlauchstrang eingefüllt werden kann, und mit einer Konfektionierungseinrichtung, in der der befüllte Schlauchstrang in einzelne geschlossene Kapselhüllen unterteilt werden kann, die jeweils eine Portion der Additivsubstanz beinhalten.

Erfindungsgemäß ist vorgesehen, dass die Vorrichtung eine Extrusionsvorrichtung aufweist und dass die Befüllungseinrichtung mit der Extrusionsvorrichtung kombiniert oder unmittelbar anschließend angeordnet ist. Durch die Kombination der Extrusionsvorrichtung mit einer Befüllungseinrichtung und einer Konfektionierungseinrichtung kann äußerst kostengünstig ein mit einer Additivsubstanz befüllter Schlauchstrang extrudiert und anschließend in der Konfektionierungseinrichtung in einzelne geschlossene Kapselhüllen unterteilt werden, welche die Additivkapseln bilden.

In vorteilhafter Weise ist vorgesehen, dass die Befüllungseinrichtung eine Stopfpumpe oder einen pneumatischen Dichtstromförderer aufweist. Es ist ebenfalls möglich, für die Befüllungseinrichtung eine hydraulische Pumpe, einen Verdichter oder einen Extruder zu verwenden.

Um die Herstellung eines mehrschichtigen Schlauchstrangs zu ermöglichen ist erfindungsgemäß vorgesehen, dass die Extrusionsvorrichtung einen Co-Extruder aufweist.

Gemäß einer vorteilhaften Ausgestaltung des Erfindungsgedankens ist vorgesehen, dass die Konfektionierungseinrichtung ein Trennwerkzeug aufweist, mit dem ein Abschnitt des befüllten Schlauchstrangs gleichzeitig in mehrere abgeschlossene Kapselhüllen unterteilt werden kann, wobei einzelne Kapselhüllen verschlossen und voneinander getrennt werden.

Im Hinblick auf eine kostengünstige Herstellung einer großen Anzahl von Additivkapseln ist vorgesehen, dass die Extrusionsvorrichtung eine gleichzeitige Extrusion mehrerer befüllter Schlauchstränge ermöglicht. Zu diesem Zweck können beispielsweise mehrere Extrusionsköpfe in dem Extrusionswerkzeug nebeneinander angeordnet und jeweils mit der Befüllungsvorrichtung und einem materialzuführenden Extruder verbunden sein.

Nachfolgend werden Ausführungsbeispiele des Erfindungsgedankens näher erläutert, die in der Zeichnung dargestellt sind. Es zeigt:
Fig. 1 eine schematische Darstellung einer Vorrichtung zur Herstellung von Additivkapseln mit einem Co-Extruder, mit einer Befüllungseinrichtung und mit einer Konfektionierungseinrichtung,
Fig. 2 eine schematische Seitenansicht einer Konfektionierungseinrichtung, mit der ein befüllter Abschnitt eines Schlauchstrangs gleichzeitig in viele abgeschlossene Kapselhüllen unterteilt wird,
Fig. 3 eine Stirnansicht der in Fig. 2 dargestellten Konfektionierungseinrichtung,
Fig. 4 eine Schnittansicht in Richtung des Schlauchstrang, einer mit dieser Vorrichtung hergestellten Additivkapseln,
Fig. 5 eine Schnittansicht durch einen Schlauchstrang, der eine aus zwei Schichten bestehende Kapselhülle aufweist, und
Fig. 6 eine Schnittansicht durch einen Schlauchstrang, der mehrere separat befüllbare Kammern aufweist.

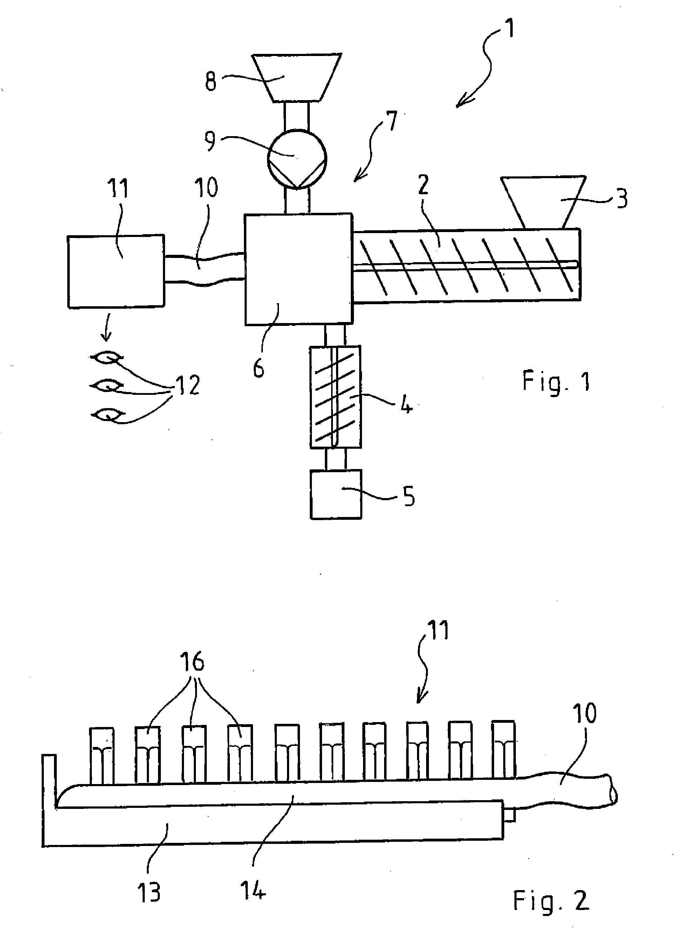

In Fig. 1 ist schematisch eine Vorrichtung 1 zur Herstellung von Additivkapseln dargestellt. Die Vorrichtung 1 weist einen Extruder 2 auf, der über eine Materialaufgabestation 3 mit einem für die Herstellung einer Kapselhülle von Additivkapseln geeigneten Kunststoff-Polymermaterial beschickt werden kann. Die Vorrichtung 1 weist zusätzlich einen optional einsetzbaren Co-Extruder 4 auf. Über eine Materialaufgabestation 5 kann durch den Co-Extruder 4 weiteres Kunststoffmaterial zugeführt werden, falls die Kapselhülle der einzelnen Additivkapseln aus mehreren Schichten bestehen soll. Der Extruder 2 und der Co-Extruder 4 münden in einen Extrusionskopf 6. Der Extrusionskopf 6 weist ein geeignetes Schlauchextrusionswerkzeug auf, um kontinuierlich einen Schlauchstrang aus dem über den Extruder 2 und gegebenenfalls über den Co-Extruder 4 zugeführten Kunststoffmaterial herstellen zu können.

An den Extrusionskopf 6 ist eine Befüllungseinrichtung 7 angekoppelt. Über einen Materialaufgabebehälter 8 kann eine Additivsubstanz mit Hilfe einer Stopfpumpe 9 während oder unmittelbar im Anschluss an die Extrusion in einen extrudierten Schlauchstrang 10 eingefüllt werden. Der mit der Additivsubstanz befüllte Schlauchstrang 10 wird anschließend zu einer Konfektionierungseinrichtung 11 gefördert. In der Konfektionierungseinrichtung 11 werden aus dem kontinuierlich erzeugten Schlauchstrang 10 einzelne jeweils geschlossene und mit einer Portion der Additivsubstanz gefüllte Additivkapseln 12 hergestellt.

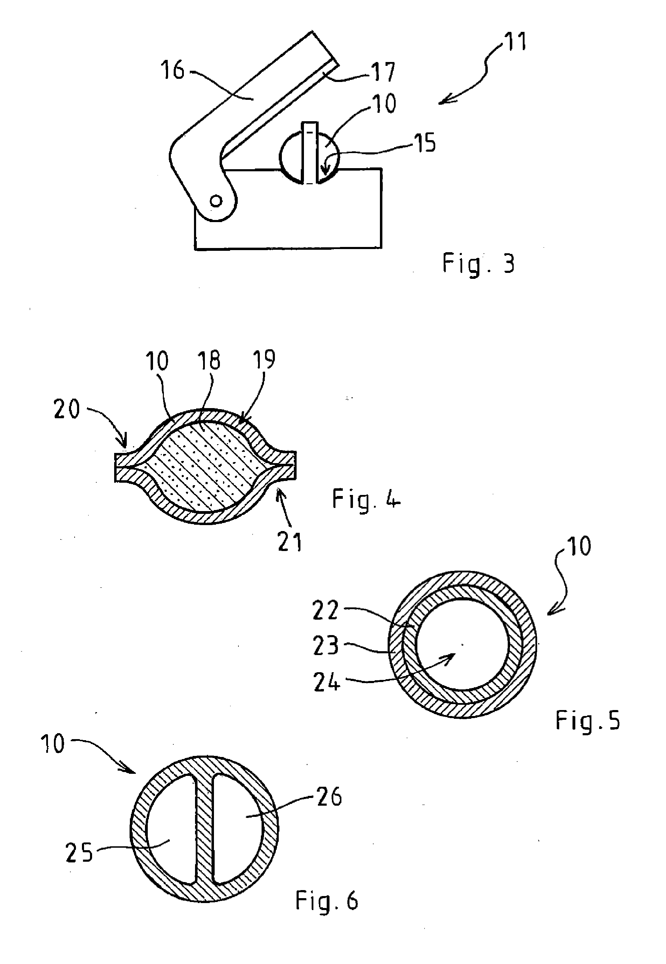

Die in den Figuren 2 und 3 schematisch dargestellte Konfektionierungseinrichtung 11 weist ein Schließ- und Trennwerkzeug 13 auf. Ein gleichzeitig zu bearbeitender Abschnitt 14 des Schlauchstrangs 10 wird in eine Rinne 15 gefördert. Alternativ oder zusätzlich zu der Rinne 15 könnten einzelne Mulden in der Konfektionierungseinrichtung 11 ausgebildet sein, deren Abmessungen und Wölbung an die Abmessungen der herzustellenden Additivkapseln 12 angepasst sind. Das kammartig mit einer Anzahl Zinken 16 ausgestaltete beheizbare Schließ- und Trennwerkzeug 13 wird auf den Abschnitt 14 des Schlauchstrangs 10 verschwenkt und mit einem vorweggebaren Anspressdruck aufgepresst. Durch die einzelnen Zinken 16 wird der Schlauchstrang 10 jeweils zusammengedrückt und durch die lokale Hitzeentwicklung bereichsweise aufgeschmolzen bzw. verklebt und verschlossen, so dass zwischen den benachbarten Zinken 16 jeweils abgeschlossene Bereiche des Schlauchstrangs 10 entstehen, deren Rändern miteinander verschmolzen und dadurch verschlossen sind. Die einzelnen Zinken 16 weisen jeweils Schneiden 17 auf, mit Hilfe derer die einzelnen abgeschlossenen Bereiche des Schlauchstrangs 10 voneinander getrennt werden, so dass die mit der Additivsubstanz befüllten Additivkapseln 12 gebildet werden.

In Fig. 4 ist eine auf diese Weise hergestellte Additivkapseln 12 in einer Schnittansicht schematisch dargestellt. Eine Portion der Additivsubstanz 18 ist von einer geschlossenen Kapselhülle 19 umgeben. Die Kapselhülle 19 besteht aus einem kurzen Abschnitt des Schlauchstrangs 10, der an den ursprünglich offenen Randbereichen 20, 21 verschlossen bzw. verschweißt wurde.

Der exemplarisch in Fig. 5 dargestellte Schlauchstrang 10 kann zwei Schichten 22, 23 aufweisen, die aus unterschiedlichen Materialien bestehen. Die einem Innenraum 24 zugewandte Schicht 22 besteht zweckmäßigerweise aus einem Material, dass möglichst inert und widerstandsfähig gegenüber der Additivsubstanz ist, die in den Schlauchstrang 10 eingefüllt wird. Die äußere Schicht 23 umgibt die innere Schicht 22 und besteht aus einem elastischen, bzw. dehnfähigen Material, das für die Herstellung des Schlauchstrangs 10 und die anschließende Konfektionierung der einzelnen Additivkapseln 12 besonders geeignet ist.

Es ist ebenfalls möglich, dass der Schlauchstrang 10 zwei getrennte Kammern 25, 26 aufweist, wie es in Fig. 6 dargestellt ist. In die beiden Kammern 25, 26 können zwei verschiedene Additivsubstanzen eingefüllt werden, die sich während der Herstellung und Lagerung der Additivkapseln 12 nicht mischen sollen. Werden die Additivkapseln 12 zu einem späteren Zeitpunkt bestimmungsgemäß verwendet und beispielsweise einer Rohschmelze eines Kunststoffpolymers zufügt, schmilzt der Strauchstrang 10, bzw. die daraus hergestellte Kapselhüllen 19 der Additivkapseln 12 und gibt die beiden Kammern 25, 26 bzw. die jeweils darin befindlichen Additivsubstanzen frei, die dann miteinander vermengt und mit der Kunststoffschmelze vermischt werden.

## Patentansprüche

1. Verfahren zur Herstellung von Additivkapseln (12), die in einer Kapselhülle (19) eine Portion einer Additivsubstanz (18) enthalten, **dadurch gekennzeichnet, dass** die Additivsubstanz in einen Schlauchstrang (10) aus einem Umhüllungsmaterial eingefüllt wird, der anschließend in mehrere abgeschlossene Kapselhüllen (19) unterteilt wird, die jeweils eine Portion der Additivsubstanz (18) enthalten.

2. Verfahren nach Anspruch 1, **dadurch gekennzeichnet, dass** ein mit der Additivsubstanz befüllter Abschnitt (14) des Schlauchstrangs (10) gleichzeitig in mehrere jeweils abgeschlossene Kapselhüllen (19) unterteilt wird.

3. Verfahren nach Anspruch 1 oder Anspruch 2, **dadurch gekennzeichnet, dass** der Schlauchstrang (10) mit einem Extrusionsverfahren aus einem geeigneten Polymermaterial hergestellt wird.

4. Verfahren nach Anspruch 3, **dadurch gekennzeichnet, dass** die Additivsubstanz während oder unmittelbar im Anschluss an die Extrusion des Schlauchstrangs (10) in den Schlauchstrang (10) eingefüllt wird.

5. Verfahren nach einem der vorangehenden Ansprüche, **dadurch gekennzeichnet, dass** der Schlauchstrang (10) mehrschichtig hergestellt wird.

6. Verfahren nach einem der vorangehenden Ansprüche, **dadurch gekennzeichnet, dass** der Schlauchstrang (10) vor der Befüllung mit der Additivsubstanz aufgedehnt wird.

7. Verfahren nach einem der vorangehenden Ansprüche, **dadurch gekennzeichnet, dass** der Schlauchstrang (10) mehrere sich über die Länge des Schlauchstrangs (10) oder eines Abschnitts (14) des Schlauchstrangs (10) erstreckende Kammern (25, 26) aufweist, die mit einer ersten Additivsubstanz und mit mindestens einer zweiten Additivsubstanz befüllt werden, wobei sich die Zusammensetzung und/oder der Aggregatzustand der ersten Additivsubstanz von der Zusammensetzung und/oder der Aggregatzustand der zweiten Additivsubstanz unterscheidet.

8. Vorrichtung (1) zur Herstellung von Additivkapseln (12) mit einer Befüllungseinrichtung (7) in der eine Additivsubstanz in einen Schlauchstrang (10) eingefüllt werden kann, und mit einer Konfektionierungseinrichtung (11), in der der befüllte Schlauchstrang (10) in einzelne geschlossene Kapselhüllen (19) unterteilt werden kann, die jeweils eine Portion der Additivsubstanz (18) enthalten, **dadurch gekennzeichnet, dass** die Vorrichtung (1) eine Extrusionsvorrichtung aufweist und die
Befüllungseinrichtung (7) mit der Extrusionsvorrichtung kombiniert oder unmittelbar anschließend angeordnet ist.

9. Vorrichtung (1) nach Anspruch 8, **dadurch gekennzeichnet, dass** die Befüllungseinrichtung (7) eine Stopfpumpe (9), eine hydraulische Pumpe, einen Verdichter, einen Extruder oder einen pneumatischen Dichtstromförderer aufweist.

10. Vorrichtung nach Anspruch 8 oder Anspruch 9, **dadurch gekennzeichnet, dass** die Extrusionsvorrichtung einen Co-Extruder (4) aufweist.

11. Vorrichtung (1) nach einem der Ansprüche 8 bis 10, **dadurch gekennzeichnet, dass** die Konfektionierungseinrichtung (11) ein Schließ- und Trennwerkzeug (13) aufweist, mit dem ein Abschnitt (14) des befüllten Schlauchstrangs (10) gleichzeitig in mehrere abgeschlossene Kapselhüllen (19) unterteilt werden kann.

12. Vorrichtung (1) nach einem der Ansprüche 8 bis 11, **dadurch gekennzeichnet, dass** die Extrusionsvorrichtung eine gleichzeitige Extrusion mehrerer befüllter Schlauchstränge (10) ermöglicht.
